**Europäisches Patentamt**

**European Patent Office**

**Office européen des brevets**

(19)

(11) Numéro de publication: **0 230 156 B1**

(12)

# FASCICULE DE BREVET EUROPEEN

(45) Date de publication du fascicule du brevet:
**11.07.90**

(51) Int. Cl.⁵: **A01G 3/04**

(21) Numéro de dépôt: **86402331.2**

(22) Date de dépôt: **17.10.86**

(54) **Rogneuse modulaire.**

(30) Priorité: **22.10.85 FR 8515800**

(43) Date de publication de la demande:
**29.07.87 Bulletin 87/31**

(45) Mention de la délivrance du brevet:
**11.07.90 Bulletin 90/28**

(84) Etats contractants désignés:
**AT CH DE ES FR GR IT LI LU**

(56) Documents cités:
**EP-A- 0 060 600
DE-U- 8 020 425
DE-U- 8 300 489
FR-A- 2 423 142
GB-A- 2 059 236
GB-A- 2 126 067
US-A- 4 302 922**

(73) Titulaire: **COLLARD Michel, Ets COLLARD CMV
BP 1 Bouzy, F-51150 Tours sur Marne(FR)**

(72) Inventeur: **COLLARD Michel, Ets COLLARD CMV
BP 1 Bouzy, F-51150 Tours sur Marne(FR)**

(74) Mandataire: **Gérardin, Robert Jean René, PROT'INNOV
INTERNATIONAL SA Résidence de l'Observatoire
avenue Georges Clémenceau Boîte Postale 2764,
F-51066 Reims Cédex(FR)**

## Description

L'invention concerne une rogneuse modulaire constituée d'éléments se fixant les uns aux autres et s'entraînant mutuellement; chaque élément étant constitué d'un carter modulaire profilé sur lequel est fixé, un arbre équipé à l'une des extrémités d'une lame coupante et, à l'autre extrémité d'une poulie double, et son procédé de fabrication.

Sur les rogneuses connues à ce jour, les lames de coupe et leur dispositif d'entraînement étaient fixés sur un bâti en une seule partie, dont la hauteur et la forme étaient fonction de la hauteur et, parfois, de l'épaisseur des rangs de végétation concernée.

Il résultait de cette situation une grande variété de modèles, conçus pour des utilisations spécifiques; ce qui rendait ces matériels coûteux et encombrants, et imposait aux utilisateurs des investissements assez lourds, peu en rapport avec le taux d'utilisation. De plus, le rognage s'effectuait en utilisant des lames droites exigeant un couple de rotation important.

On connaît déjà une tondeuse ou faucheuse correspondant au préambule de la revendication 1 (demande de brevet européen n° 0060600). Le carter porte-lame est réalisé à partir d'éléments unitaires spécifiques obtenus par moulage ou injection, susceptibles d'être assemblés, en nombre variable, dans un but d'adaptation de la machine agricole dont il s'agit à certaines utilisations spécifiques et non de diversification des modèles de machines en réalisant directement des éléments modulaires de longueur appropriée à partir de profilés préfabriqués en grande longueur constituant, en quelque sorte, des profilés hors standard.

La présente invention a pour but de remédier à ces inconvénients. Cette invention résout le problème consistant à réaliser des rogneuses à la demande, à partir d'éléments modulaires standard réalisés à partir de profilés mis en œuvre par un ou plusieurs moteurs hydrauliques; l'assemblage et l'adaptation du matériel aux différents besoins pouvant être effectués directement par l'utilisateur; la coupe s'effectue par glissement de lames à tranchant progressif, ce qui diminue notablement l'effort de coupe.

La rogneuse modulaire de l'invention, constituée d'éléments se fixant les uns aux autres et s'entraînent mutuellement, chaque élément étant constitué d'un carter modulaire profilé sur lequel est fixé un arbre équipé à l'une des extrémités d'une lame coupante est caractérisée de manière générale en ce que les carters modulaires sont assemblés entre eux par l'intermédiaire de pièces de section trapézoïdale fixées par vis dans des rainures trapézoïdales aménagées dans les parois latérales des carters modulaires en ce que l'arbre est fixé aux carters modulaires par l'intermédiaire d'un boîtier supportant des roulements à billes, ledit boîtier étant de forme rectangulaire et s'emboîtant dans une rainure rectangulaire aménagée longitudinalement dans la paroi frontale du carter modulaire, en ce que l'arbre d'entraînement est creux et est muni du côté poulies de rainures permettant son entraînement par l'intermédiaire d'un moteur à arbre cannelé et du côté lame d'un flasque circulaire contre lequel la lame disposée dans un carter, est retenue par une rondelle d'arrêt et est fixée par l'intermédiaire de vis, en ce que le profilé comporte sur sa face frontale des rainures latérales disposées symétriquement par rapport au plan médian longitudinal du profilé et en ce que la partie tranchante de la lame de coupe présente une courbure de rayon décroissant du moyeu vers la périphérie.

Le diamètre de l'orifice de passage de l'arbre creux à travers la paroi frontale du carter modulaire profilé est supérieur à celui de la poulie double.

Les orifices de passage des vis de fixation du boîtier rapporté sont oblongs dans le sens longitudinal.

Le carter de la lame de coupe se fixe sur le côté du carter modulaire par l'intermédiaire d'une cornière dont l'une des ailes pénètre dans l'une des rainures latérales du carter modulaire et dont l'autre est fixée contre ledit carter modulaire par l'intermédiaire de vis.

Les orifices de passage des vis de fixation du carter dans l'aile de la cornière sont oblongs dans le sens longitudinal.

Le procédé de fabrication des rogneuses modulaires de l'invention consiste à faire réaliser en longueur standard des profilés en alliage léger de section et de dimensions correspondant à celles du carter modulaire, du boîtier de roulement et de la pièce trapézoïdale d'assemblage à tronçonner ceux-ci en longueur correspondant au niveau de modularité recherché à effectuer les perçages puis à effectuer l'assemblage des composants.

Les avantages obtenus grâce à cette invention consistent essentiellement en ceci qu'elle permet d'obtenir une modularité réelle adaptée à chaque cas d'utilisation puisque les principaux éléments sont réalisés à partir de profilés, tous les arbres sont creux et peuvent selon leur position, être entraînés directement par un moteur à bout d'arbre cannelé; l'ensemble de coupe peut être rapidement démonté. La sécurité est accrue par la présence d'une rondelle de sécurité devant la lame et par l'encastrement du boîtier de roulement. La fabrication de la rogneuse est considérablement simplifiée par l'utilisation de profilés spéciaux dont la transformation n'exige plus des tronçonnages et des perçages.

L'invention est exposée ci-après plus en détail à l'aide de dessins, représentant seulement un mode de réalisation d'une rogneuse de vigne, sur lesquels:

La figure 1 représente, une vue en coupe longitudinale d'un élément à entraînement par moteur hydraulique, renvoyant le mouvement aux éléments voisins par l'intermédiaire d'une transmission à poulie et courroies.

La figure 2 représente, une vue en perspective, montrant l'assemblage des carters modulaires par pièces de section trapézoïdale.

La figure 3 représente, une vue en coupe transversale d'un élément modulaire.

La figure 4 représente, une vue en perspective d'une rogneuse permettant le taillage latéral et l'écimage simultanés d'un rang de vigne complet.

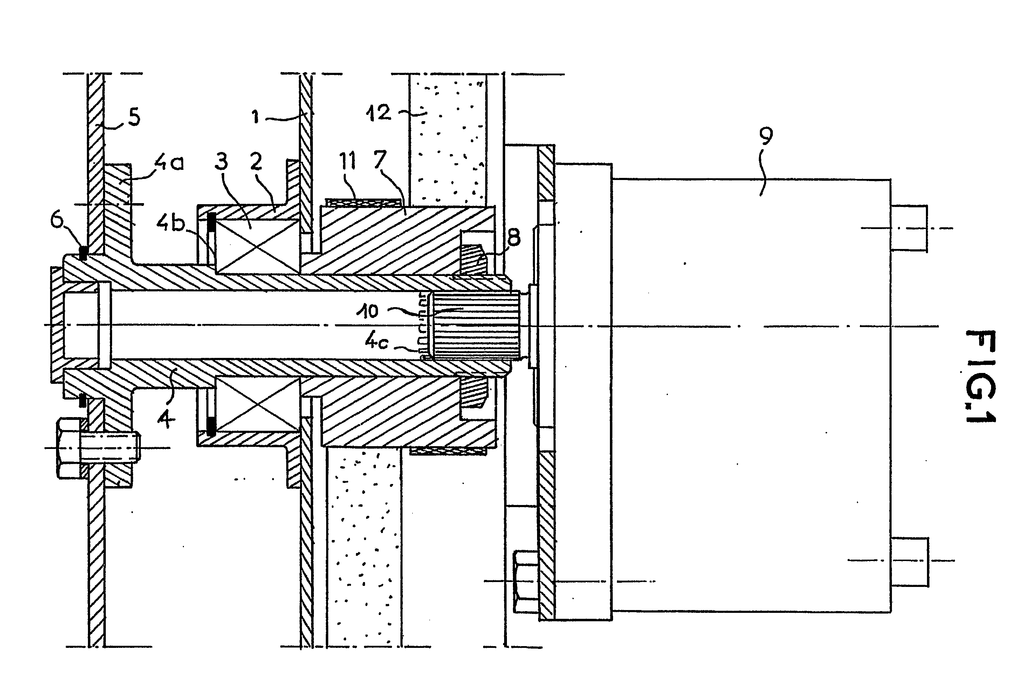

En examinant la figure 1, on remarque que chaque élément est constitué d'un carter modulaire profilé 1 sur lequel est fixé, par l'intermédiaire d'un boîtier rapporté 2 et d'un roulement à billes 3 à deux rangées de billes à contact oblique, un arbre creux 4 sur lequel sont montés, d'un côté, les lames dont la partie tranchante présente un rayon de courbure décroissant du moyeu vers la périphérie, boulonnées contre le flasque 4a et retenues contre celui-ci par une rondelle d'arrêt 6, et, de l'autre côté, une poulie double 7, solidarisée par serrage axial contre l'épaulement 4b, sous l'action de l'écrou 8, par l'intermédiaire de la bague intérieure du roulement 3.

Selon le mode de réalisation ci-dessus décrit, l'un des éléments est entraîné par un moteur hydraulique 9, dont le bout d'arbre cannelé 10 pénètre dans des rainures cannelées 4c réalisées à l'extrémité de la partie creuse de l'arbre 4.

A partir de cet unique élément motorisé le mouvement est renvoyé à tous les autres, de proche en proche, par l'intermédiaire de la poulie double 7 et des courroies 11 et 12.

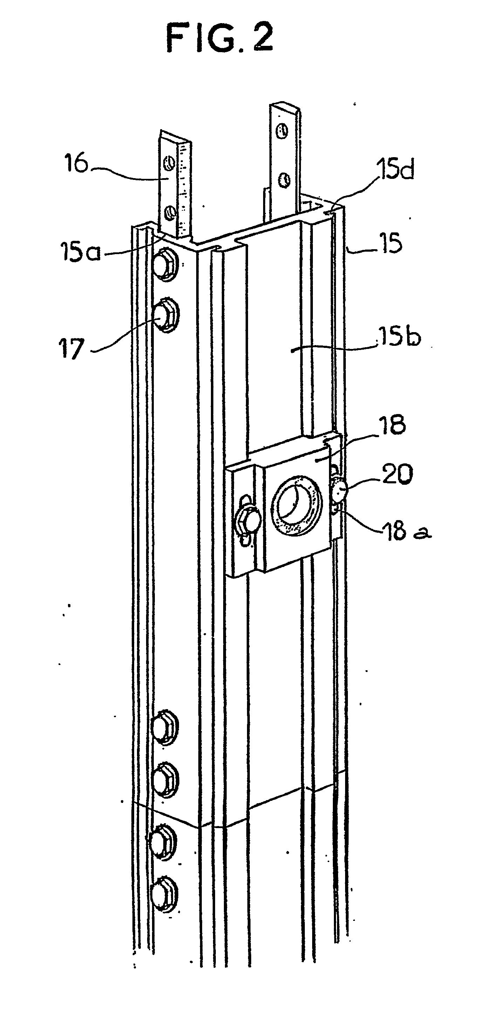

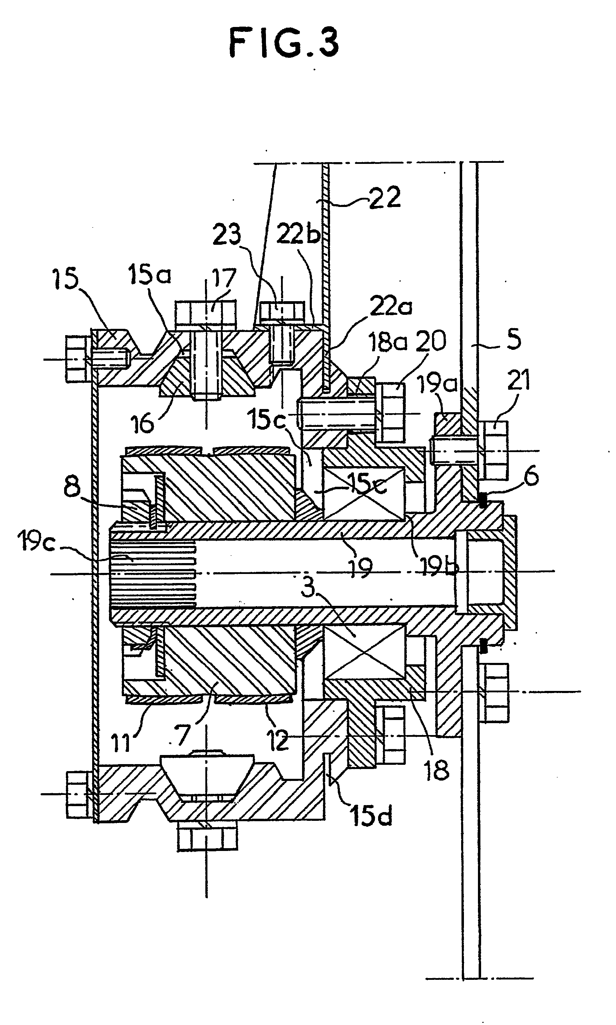

En examinant les figures 2 et 3, on remarque que, selon un mode de réalisation préférentiel, le carter modulaire profilé 15 est conçu pour permettre son assemblage avec les autres éléments par l'intermédiaire de pièces de section trapézoïdale 16, fixées par vis 17, et de rainures trapézoïdales 15a aménagées dans les parois latérales dudit carter profilé 15.

On remarque aussi que, dans ce mode de réalisation, le boîtier rapporté 18 est de forme rectangulaire et s'emboîte dans une rainure rectangulaire 15b aménagée dans la paroi frontale du carter modulaire 15 que l'orifice 15c, de passage de l'arbre creux 19 à travers la paroi frontale du carter modulaire 15, a un diamètre supérieur à celui de la poulie double 7, que les orifices 18a, de passage des vis 20 de fixation du boîtier rapporté 18, sont oblongs, afin de permettre un déplacement longitudinal du boîtier rapporté en vue, par exemple, de tendre les courroies de transmission 11 et 12, que l'arbre creux 19 est muni, du côté de la poulie double 7, de rainures 19c permettant l'introduction du bout d'arbre cannelé d'un moteur hydraulique 19a par une rondelle d'arrêt 6 et est fixée à celui-ci par des vis 21, que le profilé comporte sur sa face frontale, des rainures latérales 15d disposées symétriquement par rapport au plan médian longitudinal du profilé, que le carter 22 de la lame de coupe 5 se fixe sur le côté du carter modulaire 15 par l'intermédiaire d'une cornière dont l'une des ailes 22a pénètre dans l'une des rainures latérales 15d du carter modulaire 15 et dont l'autre 22b est fixée contre ledit carter modulaire 15 par l'intermédiaire de vis 23 dont les orifices de passage à travers l'aile 22b de la cornière sont oblongs pour faciliter les réglages en position longitudinale.

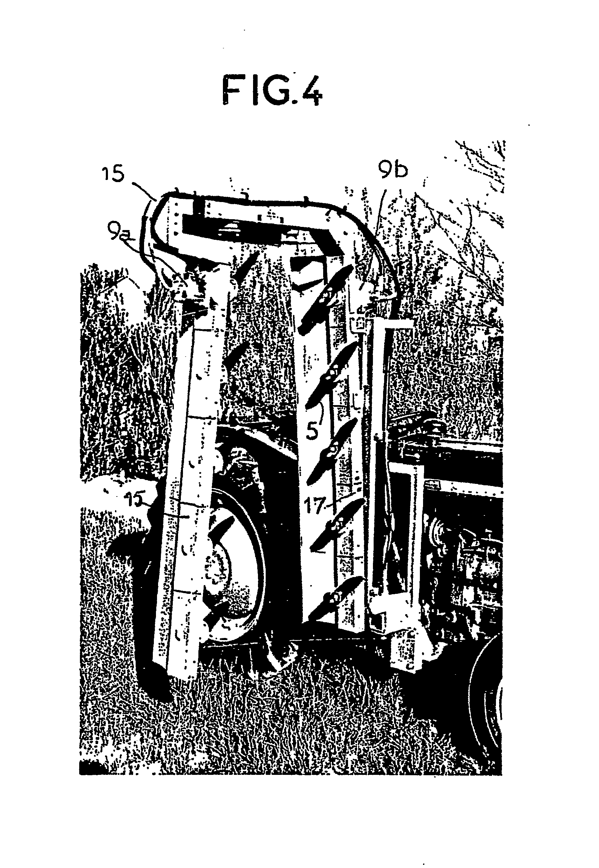

En se reportant à la figure 4, on remarque que, dans ce mode de réalisation, le rognage des deux côtés du rang de pieds de vigne et l'écimage sont obtenus simultanément par l'intermédiaire de la combinaison de modules élémentaires 15, réalisés comme représentés sur les figures 2 et 3, assemblés par l'intermédiaire des vis 17, dont deux, situés à la partie supérieure et de chaque côté, sont entraînés directement par les moteurs hydrauliques 9a et 9b alimentés par tuyauteries flexibles et coupleurs.

On a donc ainsi, un système modulaire permettant, à partir de quelques modules de base, d'obtenir un grand nombre de modèles en fonction du type de végétation, du mode de culture et du moyen de mise en œuvre; ce qui facilite le montage et les expéditions et réduit les coûts de stockage et de fabrication.

La conception des éléments permet d'obtenir un montage mécanique léger et simple qui assure une longévité exceptionnelle de la cinématique dans les meilleures conditions de sécurité, d'efficacité et de rendement.

Le procédé de fabrication utilisé consiste à faire réaliser en grande longueur, des profilés en alliage léger standard de section et de dimensions correspondant à celles du carter modulaire 15, du boîtier de roulement 18 et de la pièce trapézoïdale d'assemblage 16; à tronçonner ceux-ci en longueur correspondant au niveau de modularité recherché, à effectuer les perçages et à assurer l'assemblage; ce qui permet d'assurer la commercialisation en kit à monter par l'utilisateur.

## Revendications

1. Rogneuse modulaire constituée d'éléments se fixant les uns aux autres et s'entraînant mutuellement, chaque élément étant constitué d'un carter modulaire profilé sur lequel est fixé un arbre équipé, à l'une des extrémités, d'une lame coupante caractérisée en ce que les carters modulaires (15) sont assemblés entre eux par l'intermédiaire de pièces de section trapézoïdale (16) fixées par vis (17) dans des rainures trapézoïdales (15a) aménagées dans les parois latérales des carters modulaires (15), en ce que l'arbre est fixé aux carters modulaires (15) par l'intermédiaire d'un boîtier (18) supportant des roulements à billes, ledit boîtier étant de forme rectangulaire et s'emboîtant dans une rainure rectangulaire (15b) aménagée longitudinalement dans la paroi frontale du carter modulaire (15), en ce que l'arbre d'entraînement (19) est creux et est muni, du côté d'une poulie double (7), de rainures (19c) permettant son entraînement par l'intermédiaire d'un moteur à arbre cannelé et, du côté de la lame (5), d'un flasque circulaire (19a) contre lequel la lame (5), disposée dans un carter (22), est retenue par une rondelle d'arrêt (6) et est fixée par l'intermédiaire de vis (21), en ce que le profilé comporte, sur sa face frontale, des rainures latérales (15d) disposées symétriquement par rapport au plan médian longitudinal du profilé et en ce que la partie tranchante de la lame de coupe (5) présente une courbure de rayon décroissant du moyeu vers la périphérie.

2. Rogneuse modulaire selon la revendication 1, caractérisée en ce que le diamètre de l'orifice (15c) de passage de l'arbre creux (19) à travers la paroi frontale du carter modulaire profilé (15) est supérieur à celui de la poulie double (7).

3. Rogneuse modulaire selon la revendication 1, caractérisée en ce que les orifices (18a) de passage des vis (20) de fixation du boîtier rapporté (18) sont oblongs dans le sens longitudinal.

4. Rogneuse modulaire selon la revendication 1, caractérisée en ce que le carter (22) de la lame de coupe (5) se fixe sur le côté du carter modulaire (15) par l'intermédiaire d'une cornière dont l'une des ailes (22a) pénètre dans l'une des rainures latérales (15d) du carter modulaire et dont l'autre (22b) est fixée contre ledit carter modulaire (15) par l'intermédiaire de vis (23).

5. Rogneuse modulaire selon la revendication 4, caractérisée en ce que les orifices de passage des vis (23) de fixation du carter (22) de la lame dans l'aile (22b) de la cornière sont oblongs dans le sens longitudinal.

6. Procédé de fabrication des rogneuses modulaires telles que décrites dans les revendications 1 à 5 ci-dessus caractérisé en ce qu'il consiste à faire réaliser en grande longueur, des profilés standard en alliage léger de section et de dimensions correspondant à celles du carter modulaire (15), du boîtier de roulement (18) et de la pièce trapézoïdale d'assemblage (16), à tronçonner ceux-ci en longueur correspondant au niveau de modularité recherché à effectuer les perçages puis à réaliser l'assemblage des composants.

## Claims

1. A modular trimmer composed of elements secured together and mutually driving one another, each element being composed of a profiled modular casing on which a shaft is secured equipped, at one of its ends, with a cutter blade, characterized in that the modular casings (15) are assembled together by means of parts of trapezoidal section (16) secured by means of screws (17) in trapezoidal grooves (15a) made in the side walls of the modular casings (15), in that the shaft is secured to the modular casings (15) by means of a case (18) supporting ball bearings, the said case being of rectangular shape and engaging into a rectangular groove (15b) provided longitudinally in the front wall of the modular casing (15), in that the drive shaft (19) is hollow and is provided, on the side of a double pulley (7), with grooves (19c) allowing it to be driven by means of a grooved shaft motor and, on the blade (5) side, by means of a circular flange (19a) against which the blade (5), arranged in a casing (22) is held by a retaining washer (6) and is secured by means of screws (21), in that the profiled section has, on its front face, lateral grooves (15d) disposed symmetrically relative to the longitudinal centre plane of the profiled section, and in that the cutting part of the blade (5) has a radius curvature decreasing from the hub towards the periphery.

2. A modular trimmer according to claim 1, characterized in that the diameter of the opening (15c) for the passage of the hollow shaft (19) through the front wall of the profiled modular casing (15) is greater than that of the double pulley (7).

3. A modular trimmer according to claim 1, characterized in that the openings (18a) for the passage of the screws (20) securing the added casing (18) are oblong in the longitudinal direction.

4. A modular trimmer according to claim 1, characterized in that the casing (22) of the cutting blade (5) is secured on the side of the modular casing (15) by means of an angle bracket one wing (22a) of which enters one of the lateral grooves (15d) of the modular casing, and the other wing (22b) of which is fixed against the said modular casing (15) by means of screws (23).

5. A modular trimmer according to claim 4, characterized in that the openings for the passage of the screws (23) for securing the blade casing (22) in the wing (22b) of the bracket are oblong in the longitudinal direction.

6. A method of making modular trimmers as described in claims 1 to 5 above, characterized in that it consists in making long lengths of standard profiled sections of light alloy to sections and dimensions corresponding to those of the modular casing (15) of the roller case (18) and of the trapezoidal assembly part (16), cutting them to a length corresponding to the desired modularity level, amking the holes, and then assembling the components.

## Patentansprüche

1. Modularer Heckenschneider, bestehend aus Elementen, die aneinander befestigt sind und sich gegenseitig antreiben, wobei jedes Element aus einem modularen profilierten Gehäuse besteht, an dem eine Welle befestigt ist, die an einem ihrer Enden mit einer Schneidklinge ausgestattet ist, dadurch gekennzeichnet, daß die modularen Gehäuse (15) mittels im Querschnitt trapezförmiger Teile (16) untereinander verbunden sind, die mit Hilfe von Schrauben (17) in trapezförmigen, in den Seitenwänden der modularen Gehäuse (15) ausgebildeten Nuten (15a) befestigt sind, daß die Welle an den modularen Gehäusen (15) mit Hilfe eines ein Kugellager aufweisenden Halslagers (18) befestigt ist, das rechteckig ausgebildet ist und in eine rechteckige Nut (15b) eingreift, die sich über die Länge der Vorderseite des modularen Gehäuses (15) erstreckt, daß die Antriebswelle (19) hohl ist und auf der Seite, die zu einer Doppelrolle (7) weist, Keilrillen (19c) aufweist, die den Antrieb der Welle mittels eines Keilwellenmotors ermöglichen, und auf der Seite, die zur Klinge (5) weist, einen kreisförmigen Flansch (19a) aufweist, gegen den die in einem Gehäuse (22) angeordnete Klinge (5) durch eine Sicherungsscheibe (6) gehalten und mittels Schrauben (21) befestigt ist, daß das profilierte Gehäuse an seiner Vorderseite seitliche Nuten (15d) aufweist, die in Bezug auf die längs verlaufende Mittelebene des profilierten Gehäuses symmetrisch angeordnet sind, und daß der schneidende Teil der Schneidklinge (5) eine Krümmung aufweist, dessen Radius von der Nabe zum Umfang hin abnimmt.

2. Modularer Heckenschneider nach Anspruch 1, dadurch gekennzeichnet, daß der Durchmesser der Öffnung (15c) zum Einsetzen der Hohlwelle (19) durch die Vorderwand des modularen Profilkörpers (15) hindurch größer als der Durchmesser der Doppelrolle (7) ist.

3. Modularer Heckenschneider nach Anspruch 1, dadurch gekennzeichnet, daß die Öffnungen (18a) für den Durchgang der Schrauben (20) für die Befestigung des aufgesetzten Halslagers (18) in Längsrichtung länglich ausgebildet sind.

4. Modularer Heckenschneider nach Anspruch 1, dadurch gekennzeichnet, daß das Gehäuse (22) der Schneidklinge (5) seitlich an dem modularen Gehäuse (15) mit Hilfe eines Winkelprofils befestigt ist, dessen einer Schenkel (22a) in eine der seitlichen Nuten (15d) des modularen Gehäuses eingreift und dessen anderer Schenkel (22b) an dem modularen Gehäuse (15) mit Hilfe von Schrauben (23) befestigt ist.

5. Modularer Heckenschneider nach Anspruch 4, dadurch gekennzeichnet, daß die Öffnungen für den Durchgang der Schrauben (23) für die Befestigung des Gehäuses (22) der Klinge in dem Schenkel (22b) des Winkelprofils in Längsrichtung länglich ausgebildet sind.

6. Verfahren zur Herstellung der in den vorgehenden Ansprüchen 1 bis 5 beschriebenen modularen Heckenschneider, dadurch gekennzeichnet, daß Standardprofilkörper großer Länge aus einer Leichtlegierung hergestellt werden, deren Querschnitt und Dimensionen denen des modularen Gehäuses (15), des Wälzlagergehäuses (18) und des trapezförmigen Anbauteiles (16) entsprechen, daß diese auf eine Länge geschnitten werden, die der gewünschten Modularitätshöhe entspricht, daß die Bohrungen durchgeführt und anschließend die Einzelteile zusammengebaut werden.

# FIG.1

# FIG. 2

# FIG.3

# FIG.4